(19) 

**Europäisches Patentamt**
**European Patent Office**
**Office européen des brevets**

(11) **EP 2 154 831 A1**

(12) **EUROPÄISCHE PATENTANMELDUNG**

(43) Veröffentlichungstag:
**17.02.2010 Patentblatt 2010/07**

(51) Int Cl.:
***H04L 12/40*** (2006.01)

(21) Anmeldenummer: **08014318.3**

(22) Anmeldetag: **11.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Siemens Aktiengesellschaft**
**80333 München (DE)**

(72) Erfinder: **Gottron, Jens**
**76185 Karlsruhe (DE)**

(54) **Verfahren zur Bestimmung der Adresse oder der Position eines Teilnehmers**

(57)  Die Erfindung betrifft ein Verfahren zur Bestimmung der Adresse oder der Position eines Teilnehmers von verbundenen Teilnehmern (2,3,4,5). Es werden Maßnahmen (St1,St4) vorgeschlagen, wodurch die Adress- oder die Positionsbestimmung eines Teilneh- mers innerhalb eines Systems, beispielsweise die Position einer Baugruppe eines mehrere Baugruppen aufwei- senden modularen Automatisierungsgerätes, ohne Bus- kommunikation möglich ist, wobei die Baugruppen selbst ihre Position bzw. Adresse bestimmen.

FIG 2

**Beschreibung**

Die Erfindung betrifft ein Verfahren zur Bestimmung der Adresse oder der Position eines Teilnehmers von verbundenen Teilnehmern. Darüber hinaus betrifft die Erfindung eine Anordnung zur Durchführung des Verfahrens und ferner einen Teilnehmer, welcher für einen Einsatz in einer derartigen Anordnung geeignet ist.

Um Nachrichten zwischen einer Vielzahl von kommunikativ verbundenen Teilnehmern austauschen zu können, ist vorzugsweise ein gemeinsamer Übertragungsweg vorgesehen, wobei der Datentransfer in paralleler oder serieller Form erfolgen und zu einem Zeitpunkt nur eine Nachricht über diesen Übertragungsweg transportiert werden kann. In einer derartigen Verbindungsstruktur - die auch als Busstruktur bezeichnet wird - ist für jeden Teilnehmer eine Adresse erforderlich, mit welcher ein Teilnehmer, z. B. ein Teilnehmer in Form einer CPU- oder Master-Einheit, auf die anderen Teilnehmer, z. B. Peripherie- oder Slave-Einheiten, lesend oder schreibend zugreifen kann.

Der vorliegenden Erfindung liegt daher die Aufgabe zugrunde, ein Verfahren der eingangs genannten Art anzugeben, welches die Bestimmung der eigenen Adresse bzw. der eigenen Position eines Teilnehmers von verbundenen Teilnehmern ermöglicht. Ferner ist eine Anordnung zu schaffen, welche zur Durchführung des Verfahrens geeignet ist, und darüber hinaus ein Teilnehmer für die Verwendung in einer derartigen Anordnung.

Diese Aufgabe wird im Hinblick auf das Verfahren mit den im kennzeichnenden Teil des Anspruchs 1, im Hinblick auf die Anordnung mit den im kennzeichnenden Teil des Anspruchs 3 und im Hinblick auf den Teilnehmer mit den im kennzeichnenden Teil des Anspruchs 6 angegebenen Maßnahmen gelöst.

Vorteilhaft ist, dass jeder Teilnehmer automatisch seine eigene Position, die als Adresse verwendet werden kann, beispielsweise innerhalb eines Kommunikationsnetzes mit mehreren Teilnehmern bestimmt bzw. ermittelt, ohne den Ausbau bzw. Ausbaugrad dieses Kommunikationsnetzes zu kennen. Eine Kommunikation zwischen den Teilnehmern über den dafür vorgesehenen Bus des Kommunikationsnetzes ist dazu nicht erforderlich, die Bestimmung bzw. Ermittlung der Position oder der Adresse erfolgt ohne eine derartige Buskommunikation. Der jeweilige Teilnehmer erkennt seine eigene Position innerhalb des Systems, wobei diese Position als Adresse für einen Schreib- und/oder Lesezugriff durch eine Master-Einheit vorgesehen ist. Ferner ist vorteilhaft, dass z. B. in einem mit mehreren Baugruppen versehenen Automatisierungsgerät mit einem gemeinsamen Übertragungsweg in Form eines Rückwandbusses die CPU-Baugruppe nach dem Einschalten sofort die weiteren Baugruppen ansprechen und abfragen kann. Für den Fall, dass z. B. die CPU-Baugruppe auf die Baugruppe mit der Position bzw. Adresse "drei" zugreift, weiß diese Baugruppe mit der Adresse "drei", dass sie gemeint ist, und kann sich identifizieren, indem sie der CPU-Baugruppe den Baugruppentyp übermittelt.

In einer Ausgestaltung der Erfindung ist vorgesehen, dass der jeweilige Teilnehmer die Anzahl der Teilnehmer innerhalb des Systems erkennt, wodurch jeder Teilnehmer den Ausbaugrad des Systems "weiß".

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1 und 3    eine Anordnung mit mehreren Teilnehmern und
Figur 2          ein Flussdiagramm.

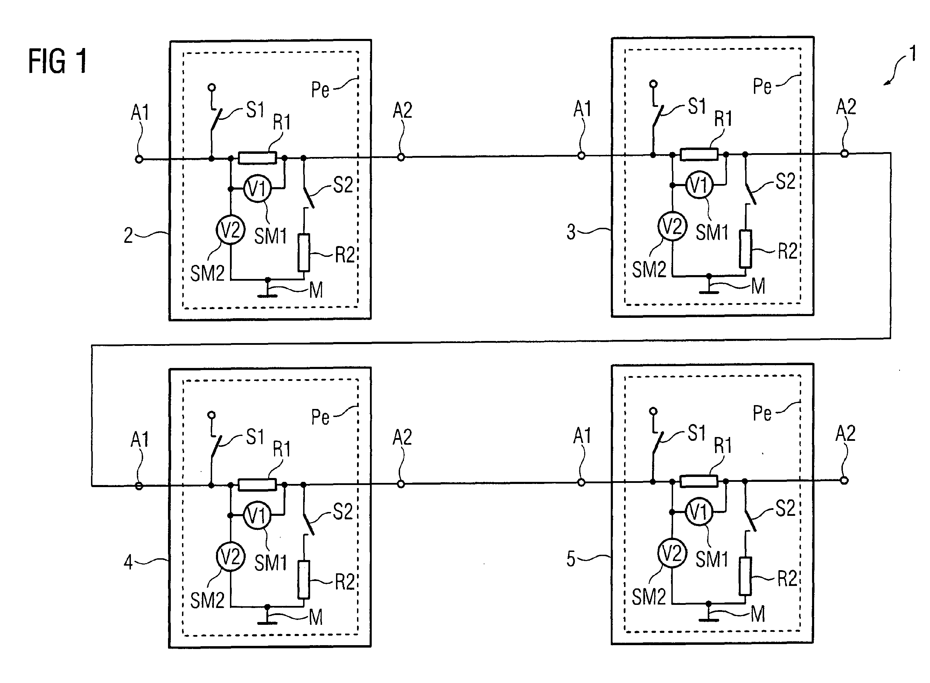

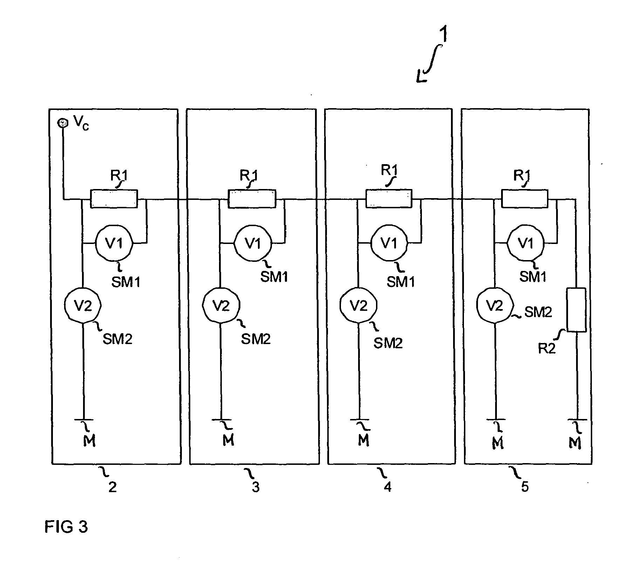

Die in den Figuren 1 und 3 dargestellten gleichen Teile sind mit den gleichen Bezugszeichen versehen.

In Figur 1 ist mit 1 eine Anordnung mit vier seriell angeordneten Teilnehmern 2, 3, 4, 5 bezeichnet, die jeweils mit einer Positionserkennungsschaltung PE versehen sind. Die Teilnehmer 2, 3, 4, 5 sind beispielsweise Baugruppen eines modularen Automatisierungsgerätes, die in Steckplätze eines Baugruppenträgers des Automatisierungsgerätes steckbar und über einen Rückwandbus des Baugruppenträgers miteinander verbunden sind. Die Baugruppen des Automatisierungsgerätes sind z. B. als CPU-, Kommunikations- oder als digitale oder analoge Ein-/Ausgabe-Baugruppen oder als sonstige zur Steuerung eines technischen Prozesses geeignete Funktions-Baugruppen verwirklicht, wobei die Baugruppen für einen Informationsaustausch über einen hier nicht dargestellten Steuer-, Daten- und Adressleitungen aufweisenden Rückwandbus miteinander verbunden sind. Dieser Rückwandbus kann als serieller Bus oder als Parallelbus ausgebildet sein, wobei als Busleitungsverbindungsstrukturen eine Sammelleitung, Stichleitungen oder Daisy-Chain-Verbindungen möglich sind.

Die Positionserkennungsschaltungen PE sind identisch aufgebaut und über eine Leitung in Reihe geschaltet, wobei ein erster Anschluss A1 einer Schaltung eines Teilnehmers 2, 3, 4, 5 mit einem zweiten Anschluss A2 einer Schaltung eines benachbarten Teilnehmers 2, 3, 4, 5 verbunden ist. Jede der Positionserkennungsschaltungen PE ist mit einem Widerstand R1 verbunden, welcher über einen ersten steuerbaren Schalter S1 an ein erstes Potential in Form einer Versorgungsspannung Vc und über einen zweiten steuerbaren Schalter S2 und einen Widerstand R2 an ein zweites Potential in Form eines Massepotentials M anschließbar ist, wobei die Widerstände R1 der Schaltungen PE in Reihe geschaltet sind. Um einen Spannungsabfall am Widerstand R1 bzw. um einen durch den jeweiligen Widerstand R1 fließenden Strom ermitteln zu können, ist jede Positionserkennungsschaltung PE mit einem ersten Spannungsmesser SM1 versehen. Ferner weist jede Positionserkennungsschaltung PE einen zweiten Spannungsmesser SM2 auf, der auf einer Seite des Widerstands R1, also am Ein- oder am Ausgang der Schaltung PE, die Spannung gegen Masse aufnimmt. Im Folgenden wird beispielhaft die Spannung am Eingang der Positionserkennungsschaltung PE erfasst. Die steuerbaren Schalter S1, S2 sind beispielsweise Transistoren, die jeweils über eine hier nicht dargestellte Einheit, z. B. eine Einheit in Form eines Mikrocontrollers, angesteuert werden, und zwar in der Art und Weise, dass die Position der jeweiligen Teilnehmer 2, 3, 4, 5 innerhalb der Anordnung sowie die Anzahl der Teilnehmer durch den Mikrocontroller bestimmt werden kann. Dazu weist der Mikrocontroller einen geeigneten D/A-Wandler zur Erzeugung von analogen Signalen zur Ansteuerung der Schalter S1, S2, einen geeigneten A/D-Wandler zum Einlesen der Strom- bzw. Spannungswerte der Spannungsmesser SM1, SM2 sowie eine geeignete Auswertevorschrift bzw. einen geeigneten Auswertealgorithmus auf.

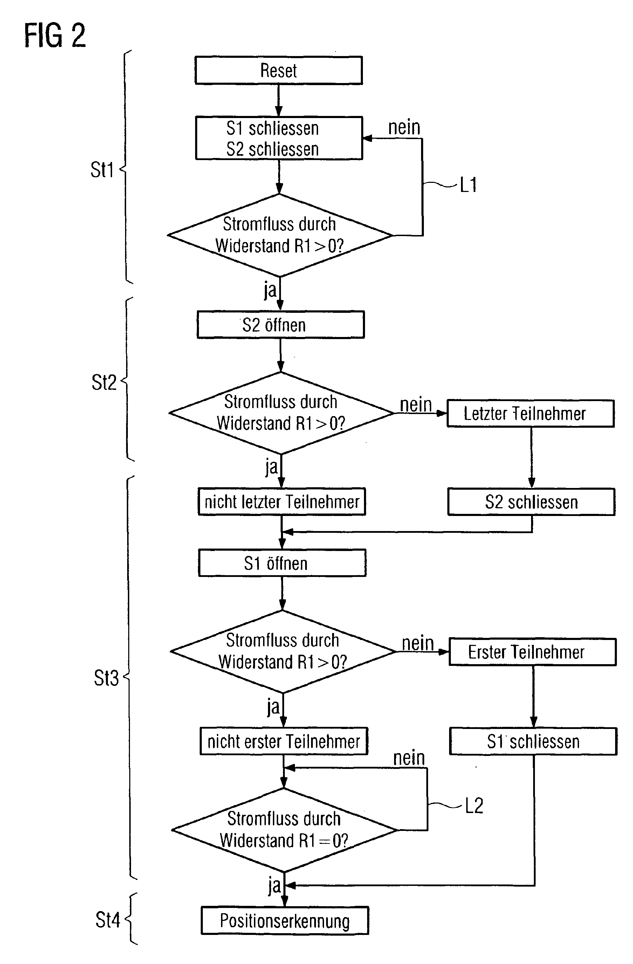

Zur näheren Erläuterung dazu wird im Folgenden auf Figur 2 verwiesen. Dort ist ein Flussdiagramm dargestellt, mit welchem die Positionsbestimmung der Teilnehmer 2, 3, 4, 5 veranschaulicht wird, wobei jeder der Teilnehmer 2, 3, 4, 5 die in dem Flussdiagramm dargestellten Aktionen selbstständig ausführt.

Jede Schaltung PE wird zunächst durch ihren Mikrocontroller während einer ersten Schrittfolge St1 in einen Grundzustand versetzt und schließt in diesem Grundzustand die steuerbaren Schalter S1, S2, wodurch einerseits die ersten Anschlüsse A1 der Schaltungen PE mit der Versorgungsspannung Vc und andererseits die zweiten Anschlüsse A2 der Schaltungen PE über den Widerstand R2 mit dem Massepotential M verbunden werden. Während dieser Schrittfolge St1 fließt lediglich ein Strom durch den Widerstand R1 der Schaltung PE des letzten Teilnehmers 5, wobei der Strom erfasst wird, indem der Spannungsabfall am Widerstand R1 durch den Spannungsmesser SM1 gemessen und daraus der Strom durch den Mikrocontroller errechnet wird. Durch die Widerstände R1 der Schaltungen PE der restlichen Teilnehmer 2, 3 und 4 fließt dagegen kein Strom, weil an den jeweiligen ersten und zweiten Anschlüssen A1, A2 das gleiche Potential - also die Versorgungsspannung Vc - anliegt. Diese restlichen Teilnehmer 2, 3 und 4 verbleiben daher zunächst in dieser ersten Schrittfolge St1, was in der Figur 2 durch eine Schleife L1 angedeutet ist.

In einer zweiten Schrittfolge St2 steuert der Mikrocontroller des Teilnehmers 5 den zweiten Schalter S2 derart an, dass dieser geöffnet wird, wobei der erste Schalter S1 geschlossen bleibt. Die ersten und zweiten Schalter S1, S2 der Schaltungen der Teilnehmer 2, 3 und 4 bleiben - wie beschrieben - geschlossen, weil durch den Widerstand R1 der jeweiligen Schaltung PE dieser Teilnehmer während der ersten Schrittfolge St1 kein Strom fließt. Aufgrund des geöffneten zweiten Schalters S2 der Schaltung PE des Teilnehmers 5 fließt nun auch kein Strom durch den Widerstand R1 dieser Schaltung PE, wodurch der Mikrocontroller erkennt, dass der Teilnehmer 5 der letzte Teilnehmer der Anordnung ist, weil vor der Öffnung des zweiten Schalters S2 noch Strom durch den Widerstand R1 geflossen ist.

In einer dritten Schrittfolge St3 schließt der Mikrocontroller des letzten Teilnehmers 5 der Anordnung wieder diesen zweiten Schalter S2, wodurch die Schaltung PE wieder über den zweiten Widerstand R2 mit dem Massepotential M verbunden ist, und öffnet ferner den ersten Schalter S1, wodurch der erste Anschluss A1 der Schaltung PE des Teilnehmers 5 nicht mehr an die Versorgungsspannung Vc angeschlossen ist. Um zu erkennen, ob der letzte Teilnehmer 5 auch gleichzeitig der erste Teilnehmer der Anordnung ist, öffnet der Mikrocontroller des Teilnehmers 5 den ersten Schalter S1 und prüft, ob ein Strom durch den Widerstand R1 der Schaltung PE fließt. Für den Fall, dass bei geöffnetem erstem Schalter S1 kein Strom fließt, weist dies darauf hin, dass der letzte Teilnehmer 5 auch der erste bzw. einzige Teilnehmer der Anordnung ist. Wie im Folgenden ausgeführt wird, erkennt der Mikrocontroller des Teilnehmers 5, dass Strom durch den Widerstand R1 fließt und er deshalb nicht der einzige sondern der letzte Teilnehmer der Anordnung ist.

Aufgrund dessen, dass die Teilnehmer 2, 3 und 4 noch den Grundzustand (Schrittfolge St1) einnehmen und die ersten und zweiten Schalter S1, S2 der Schaltungen PE der Teilnehmer 2, 3 und 4 nach wie vor geschlossen sind, bewirkt der geöffnete erste Schalter S1 der Schaltung PE des letzten Teilnehmers 5, dass sowohl durch den Widerstand R1 der Schaltung PE des Teilnehmers 4 als auch durch den Widerstand R1 der Schaltung PE des Teilnehmers 5 Strom fließt. Dagegen fließt durch den Widerstand R1 der Schaltung PE der jeweiligen Teilnehmer 2 und 3 nach wie vor kein Strom, da an den jeweiligen ersten und zweiten Anschlüssen A1, A2 der jeweiligen Schaltung PE dieser Teilnehmer 2 und 3 das gleiche Potential - die Versorgungsspannung Vc - anliegt. Die Teilnehmer 2 und 3 verbleiben daher im Grundzustand und die Schalter S1, S2 bleiben geschlossen.

Dadurch, dass durch den Widerstand R1 der Schaltung PE des Teilnehmers 5 Strom fließt, erkennt der Mikrocontroller des Teilnehmers 5, dass er nicht der einzige sondern der letzte Teilnehmer der Anordnung ist, und der Mikrocontroller des Teilnehmers 5 bewirkt, dass dieser in einer Schleife L2 der dritten Schrittfolge St3 verbleibt.

Der Mikrocontroller des Teilnehmers 4 öffnet in der zweiten Schrittfolge St2 den zweiten Schalter S2 und erkennt, dass trotz des geöffneten zweiten Schalters S2 nach wie vor ein Strom durch den Widerstand R1 fließt. Dieser Stromfluss ergibt sich aufgrund der Versorgungsspannung Vc der Schaltung PE des Teilnehmers 4 und des Massepotentialanschlusses M der Schaltung PE des Teilnehmers 5. Dadurch, dass trotz des geöffneten zweiten Schalters S2 ein Strom durch den Widerstand R1 fließt, erkennt der Mikrocontroller, dass der Teilnehmer 4 nicht der letzte Teilnehmer der Anordnung ist (zweite Schrittfolge St2). Der Mikrocontroller öffnet den ersten Schalter S1 (dritte Schrittfolge St3), wobei der Mikrocontroller den zweiten, während der zweiten Schrittfolge St2 geöffneten Schalter S2 offen lässt. Durch den Stromfluss im Teilnehmer 4 erkennt der Mikrocontroller dieses Teilnehmers 4, dass dieser nicht der erste Teilnehmer der Anordnung ist (dritte Schrittfolge St3), und verbleibt in der Schleife L2 (Stromfluss durch Widerstand R1 ist ungleich 0) der dritten Schrittfolge St3.

Dadurch, dass nun die ersten Schalter S1 der Schaltungen PE der Teilnehmer 4 und 5 offen sind, fließt sowohl ein Strom durch den Widerstand R1 der Schaltung PE des Teilnehmers 3, dessen Schalter S1, S2 nach wie vor geschlossen sind (Schrittfolge St1), als auch ein Strom durch den Widerstand R1 der Schaltung PE der Teilnehmer 4 und 5.

Durch den Widerstand R1 der Schaltung PE des Teilnehmers 2 dagegen fließt nach wie vor kein Strom, da an den ersten und zweiten Anschlüssen A1, A2 der Schaltungen PE dieses Teilnehmers 2 das gleiche Potential anliegt.

In der im Zusammenhang mit dem Teilnehmer 4 beschriebenen Art und Weise erkennt der Mikrocontroller des Teilnehmers 3 ebenfalls, dass der Teilnehmer 3 weder der erste noch der letzte Teilnehmer der Anordnung ist, und öffnet während der zweiten und dritten Schrittfolgen St2, St3 die ersten und zweiten Schalter S1, S2, wobei der Teilnehmer 3 in der Schleife L2 (Stromfluss durch Widerstand R1 ist ungleich 0) der dritten Schrittfolge St3 verbleibt.

Aufgrund dessen, dass der Teilnehmer 3 während der zweiten und dritten Schrittfolgen St2, St3 die ersten und zweiten Schalter S1, S2 öffnet, fließt ein Strom durch den Widerstand R1 der Schaltung PE des Teilnehmers 2, wobei im Rahmen des Durchlaufs der zweiten Schrittfolge St2 - wie beschrieben - der Mikrocontroller erkennt, dass der Teilnehmer 2 nicht der letzte Teilnehmer der Anordnung ist. Im Rahmen der dritten Schrittfolge St3 erkennt der Mikrocontroller, dass nach dem Öffnen der ersten Schalter S1 der Schaltung PE des Teilnehmers 2, d. h. nach dem Abschalten der Versorgungsspannung Vc, kein Strom mehr durch den Widerstand R1 fließt. Dies bedeutet, dass der Teilnehmer 2 der erste Teilnehmer der Anordnung sein muss.

Aufgrund dessen, dass der Teilnehmer 2 den ersten Schalter S1 öffnete und somit die Versorgungsspannung Vc abschaltete, fließt ebenfalls kein Strom durch den jeweiligen Widerstand R1 der Schaltungen PE der Teilnehmer 3, 4 und 5. Die jeweiligen Mikrocontroller dieser Teilnehmer 3, 4 und 5 aktivieren daher eine Positionserkennung in einer vierten Schrittfolge St4 und "verlassen" die Schleife L2 der dritten Schrittfolge St3, wobei der erste Teilnehmer - der Teilnehmer 2 - ebenfalls seine Positionserkennung aktiviert, nachdem der Mikrocontroller des Teilnehmers 2 den ersten Schalter S1 wieder geschlossen hat.

Der geschlossene erste Schalter S1 der Schaltung PE des Teilnehmers 2 - erster Teilnehmer der Anordnung - und der geschlossene zweite Schalter S2 der Schaltung PE des letzten Teilnehmers der Anordnung - des Teilnehmers 5 - bewirken, dass nun an der Anordnung die Versorgungsspannung Vc am ersten Anschluss A1 des Teilnehmers 2 und der Widerstand R1 des Teilnehmers 5 (letzter Teilnehmer der Anordnung) über den Widerstand R2 an dem Massepotential M anliegen (Figur 3), wobei die Widerstände R1 und R2 im vorliegenden Ausführungsbeispiel gleich dimensioniert sind. Dadurch fließt durch den Widerstand R1 der Schaltung PE jedes Teilnehmers 2, 3, 4 und 5 ein Strom und jeder Mikrocontroller der Teilnehmer 2, 3, 4 und 5 bestimmt deren jeweilige Position innerhalb der Anordnung sowie die Anzahl der Teilnehmer in dieser Anordnung. Zur Bestimmung der Anzahl der Teilnehmer liest der jeweilige Mikrocontroller den Spannungswert des Spannungsmessers SM1 und zur Bestimmung der Position innerhalb der Anordnung den Spannungswert des Spannungsmessers SM2 am Eingang der Schaltung ein, d. h. am Anschluss A1 der jeweiligen Schaltung PE.

Für den Fall, dass z. B. der im jeweiligen Mikrocontroller hinterlegte Widerstandswert des Widerstands R1 2 Ohm - wobei dieser Wert nur dann von Bedeutung ist, falls die Widerstände R1 und R2 nicht gleich dimensioniert sind - und die ebenfalls im jeweiligen Mikrocontroller hinterlegte Versorgungsspannung Vc 15 Volt ist, misst der jeweilige Spannungsmesser SM2 der Schaltungen PE eine Spannung V1 von 3 Volt, wodurch der Mikrocontroller jedes Teilnehmers erkennt, dass die Anordnung insgesamt vier Teilnehmer umfasst. Am ersten Anschluss A1 des Teilnehmers 2 misst der Spannungsmesser SM2 eine Spannung V2 von 15 Volt, an dem jeweiligen ersten Anschluss A1 der Teilnehmer 3, 4 und 5 werden mittels des jeweiligen Spannungsmessers SM1 12 Volt, 9 Volt und 6 Volt gemessen. Der Mikrocontroller des Teilnehmers 3 erkennt aufgrund der Kenntnis der Versorgungsspannung Vc von 15 Volt und der Eingangsspannung von 12 Volt am Anschluss A1 der Schaltung PE des Teilnehmers 3, dass der Teilnehmer 3 der zweite Teilnehmer von vier Teilnehmern der Anordnung ist. Entsprechend erkennt der Mikrocontroller des Teilnehmers 4, dass dieser der dritte Teilnehmer, und der Mikrocontroller des letzten Teilnehmers 5, dass dieser der vierte Teilnehmer ist. Diese Positionen können von einer Master-Einheit bzw. einer CPU-Einheit im Rahmen einer Kommunikation über einen hier nicht dargestellten Kommunikationsbus als Adressen für einen Schreib- und/oder einen Lesezugriff auf die Teilnehmer 2, 3, 4, 5 genutzt werden, wobei einer der Teilnehmer 2 bis 5 selbst eine Master- bzw. CPU-Einheit sein kann.

Für den Fall, dass die Versorgungsspannung Vc 15 Volt ist und der jeweilige Spannungsmesser SM1 z. B. eine Spannung V1 von 2,5 Volt erfasst, weist dies darauf hin, dass die Anordnung fünf Teilnehmer umfasst. In diesem Fall liegt am ersten Anschluss des ersten Teilnehmers eine Spannung V2 von 15 Volt, am ersten Anschluss des zweiten Teilnehmers von 12,5 Volt und an dem jeweiligen ersten Anschluss des dritten, vierten und fünften Teilnehmers eine Spannung von 10 Volt, 7,5 Volt und 5 Volt an.

Allgemein gilt für die Ermittlung der Anzahl n der Teilnehmer:

$$I_{R1} = \frac{V_C}{(n \cdot R1) + R2} = \frac{V_1}{R1}$$

$$\frac{V_C}{V_1} = \frac{(n \cdot R1) + R2}{R1} = n + \frac{R2}{R1}$$

$$n = \frac{V_C}{V_1} - \frac{R2}{R1}$$

Für den Fall, dass der Widerstand R1=R2 ist, gilt für die Anzahl n der Teilnehmer:

$$n = \frac{V_C}{V_1} - 1$$

Für die Bestimmung der Position p gilt für den Fall, dass die Spannung V2 am ersten Anschluss A1 erfasst wird, allgemein:

$$I_{R1} = \frac{V_2}{(p \cdot R1) + R2} = \frac{V_1}{R1}$$

$$\frac{V_2}{V_1} = \frac{(p \cdot R1) + R2}{R1} = p + \frac{R2}{R1}$$

$$p = \frac{V_2}{V_1} - \frac{R2}{R1}$$

Für den Fall, dass der Widerstand R1=R2 ist und die Spannung V2 am ersten Anschluss A1 erfasst wird, gilt allgemein für die Position p der Teilnehmer:

$$p = \frac{V_2}{V_1} - 1$$

Für den Fall, dass die Spannung V2 am zweiten Anschluss A2 erfasst wird, gilt allgemein für die Bestimmung der Position p:

$$I_{R1} = \frac{V_2}{((p - 1) \cdot R1) + R2} = \frac{V_1}{R1}$$

$$\frac{V_2}{V_1} = \frac{((p - 1) \cdot R1) + R2}{R1} = p - 1 + \frac{R2}{R1}$$

$$p = \frac{V_2}{V_1} - \frac{R2}{R1} + 1$$

Für den Fall, dass der Widerstand R1=R2 ist und die Spannung V2 am zweiten Anschluss A2 erfasst wird, gilt allgemein:

$$p = \frac{V_2}{V_1}$$

**Patentansprüche**

1. Verfahren zur Bestimmung der Adresse oder der Position eines Teilnehmers von verbundenen Teilnehmern (2, 3, 4, 5), wobei jeder Teilnehmer (2, 3, 4, 5) mit einer Schaltung (PE) versehen ist, die einen zwischen einem ersten und zweiten Anschluss (A1, A2) angeschlossenen Widerstand (R1) aufweist, und die Widerstände (R1) der Schaltungen (PE) in Reihe geschaltet sind, wobei jede Schaltung (PE) folgende Verfahrensschritte verwirklicht:

   - Schließen eines steuerbaren Schalters (S1) zum Anschluss des Widerstands (R1) an ein erstes Potential (Vc),
   - Schließen eines zweiten steuerbaren Schalters (S2) zum Anschluss des Widerstands (R1) über einen weiteren Widerstand (R2) an ein zweites Potential (M),
   - Öffnen eines der steuerbaren Schalter (S2) und Prüfen, ob ein Strom durch den Widerstand (R1) fließt, wobei der Schalter (S2) geöffnet bleibt, falls Strom fließt, und wieder geschlossen wird, falls kein Strom fließt,
   - Öffnen des anderen steuerbaren Schalters (S1) und Prüfen, ob ein Strom durch den Widerstand (R1) fließt, wobei der Schalter (S1) geöffnet bleibt, falls Strom fließt, und wieder geschlossen wird, falls kein Strom fließt,
   - Erfassen einer Spannung (V2) am ersten oder dem zweiten Anschluss (A1, A2) und Ermitteln der Position oder der Adresse des Teilnehmers mittels der erfassten Spannung (V2).

2. Verfahren nach Anspruch 1, **dadurch gekennzeichnet, dass** eine weitere Spannung (V1) am Widerstand (R1) erfasst und die Anzahl (n) der Teilnehmer mittels der erfassten Spannung (V1) ermittelt wird.

3. Anordnung mit mehreren verbundenen Teilnehmern (2, 3, 4, 5), **dadurch gekennzeichnet, dass** jeder Teilnehmer (2, 3, 4, 5) mit einer Schaltung (PE) versehen ist, die einen zwischen einem ersten und zweiten Anschluss (A1, A2) angeschlossenen Widerstand (R1) aufweist, wobei die Widerstände (R1) der Schaltungen (PE) in Reihe geschaltet sind und wobei jede Schaltung (PE) versehen ist:

   - mit einem steuerbaren Schalter (S1) zum Anschluss des Widerstands (R1) an ein erstes Potential (Vc),
   - mit einem weiteren steuerbaren Schalter (S2) zum Anschluss des Widerstands (R1) über einen weiteren Widerstand (R2) an ein zweites Potential (M),
   - mit einer Einheit, welche zur Bestimmung der eigenen Adresse oder eigenen Position des Teilnehmers (2, 3, 4, 5) innerhalb der Anordnung (1)
   - einen der steuerbaren Schalter (S2) öffnet und prüft, ob ein Strom durch den Widerstand (R1) fließt, wobei die Einheit den Schalter (S2) geöffnet lässt, falls Strom fließt, und schließt, falls kein Strom fließt,
   - den anderen steuerbaren Schalter (S1) öffnet und prüft, ob ein Strom durch den Widerstand (R1) fließt, wobei die Einheit den Schalter (S1) geöffnet lässt, falls Strom fließt, und schließt, falls kein Strom fließt, und
- die Einheit eine Spannung (V2) am ersten oder dem zweiten Anschluss (A1, A2) erfasst und die Position oder die Adresse des Teilnehmers mittels der erfassten Spannung (V2) ermittelt.

4. Anordnung nach Anspruch 3, **dadurch gekennzeichnet, dass** die Einheit eine weitere Spannung (V1) am Widerstand (R1) erfasst und die Anzahl (n) der Teilnehmer mittels der erfassten Spannung (V1) ermittelt.

5. Anordnung nach Anspruch 3 oder 4, **dadurch gekennzeichnet, dass** die Teilnehmer (2, 3, 4, 5) Baugruppen eines Automatisierungsgerätes sind.

6. Teilnehmer zum Einsatz in einer Anordnung nach einem der Ansprüche 3 bis 5, **dadurch gekennzeichnet, dass** der Teilnehmer (2, 3, 4, 5) mit einer Schaltung (PE) versehen ist, die einen zwischen einem ersten und zweiten Anschluss (A1, A2) angeschlossenen Widerstand (R1) aufweist und welche versehen ist:

- mit einem steuerbaren Schalter (S1) zum Anschluss des Widerstands (R1) an ein erstes Potential (Vc),
- mit einem weiteren steuerbaren Schalter (S2) zum Anschluss des Widerstands (R1) über einen weiteren Widerstand (R2) an ein zweites Potential (M),
- mit einer Einheit, welche zur Bestimmung der eigenen Adresse oder der eigenen Position des Teilnehmers (2, 3, 4, 5) innerhalb der Anordnung (1)

- einen der steuerbaren Schalter (S2) öffnet und prüft, ob ein Strom durch den Widerstand (R1) fließt, wobei die Einheit den Schalter (S2) geöffnet lässt, falls Strom fließt, und schließt, falls kein Strom fließt,
- den anderen steuerbaren Schalter (S1) öffnet und prüft, ob ein Strom durch den Widerstand (R1) fließt, wobei die Einheit den Schalter (S1) geöffnet lässt, falls Strom fließt, und schließt, falls kein Strom fließt, und
- die Einheit eine Spannung (V2) am ersten oder dem zweiten Anschluss (A1, A2) erfasst und die Position oder die Adresse des Teilnehmers mittels der erfassten Spannung (V2) ermittelt.

7. Teilnehmer nach Anspruch 6, **dadurch gekennzeichnet, dass** die Einheit eine weitere Spannung (V1) am Widerstand (R1) erfasst und die Anzahl (n) der Teilnehmer mittels der erfassten Spannung (V1) ermittelt.

8. Teilnehmer nach Anspruch 6 oder 7, **dadurch gekennzeichnet, dass** der Teilnehmer (2, 3, 4, 5) eine Baugruppe eines Automatisierungsgerätes ist.

FIG 1

EP 2 154 831 A1

# FIG 2

St1
- Reset
- S1 schliessen / S2 schliessen ← nein
- Stromfluss durch Widerstand R1 > 0? — L1
- ja

St2
- S2 öffnen
- Stromfluss durch Widerstand R1 > 0? — nein → Letzter Teilnehmer
- ja

St3
- nicht letzter Teilnehmer
- Letzter Teilnehmer → S2 schliessen
- S1 öffnen
- Stromfluss durch Widerstand R1 > 0? — nein → Erster Teilnehmer
- ja
- nicht erster Teilnehmer
- Erster Teilnehmer → S1 schliessen
- Stromfluss durch Widerstand R1 = 0? — nein — L2
- ja

St4
- Positionserkennung

FIG 3

Europäisches
Patentamt

European
Patent Office

Office européen
des brevets

## EUROPÄISCHER RECHERCHENBERICHT

**Nummer der Anmeldung**

EP 08 01 4318

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/094001 A (ELMOS SEMICONDUCTOR AG [DE]; STEGER ROLAND [DE]) 13. November 2003 (2003-11-13) * Seite 5, Zeile 28 - Seite 7, Zeile 7 * * Seite 12, Zeile 12 - Zeile 28; Abbildung 1 * ----- | 1-18 | INV. H04L12/40 |
| A | EP 1 284 556 A (SAIA BURGESS MURTEN AG [CH]) 19. Februar 2003 (2003-02-19) * Absatz [0014] - Absatz [0036]; Abbildungen 2,3 * ----- | 1-8 | |
| A | EP 1 298 851 A (ELMOS SEMICONDUCTOR AG [DE]) 2. April 2003 (2003-04-02) * Absatz [0034] - Absatz [0055]; Abbildung 1 * ----- | 1-8 | |
| A | US 2004/078097 A1 (BRUZY CHRISTOPHE [FR] ET AL) 22. April 2004 (2004-04-22) * Abbildungen 16-22 * * Absatz [0054] - Absatz [0152] * ----- | 1-8 | |

**RECHERCHIERTE SACHGEBIETE (IPC)**

H04L
G06F

Der vorliegende Recherchenbericht wurde für alle Patentansprüche erstellt

| Recherchenort | Abschlußdatum der Recherche | Prüfer |
|---|---|---|
| München | 5. November 2008 | Nold, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 4318

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 03094001 | A | 13-11-2003 | AT<br>AU<br>EP<br>US | 297032<br>2003214259<br>1490772<br>2005132109 | T<br>A1<br>A1<br>A1 | 15-06-2005<br>17-11-2003<br>29-12-2004<br>16-06-2005 |
| EP 1284556 | A | 19-02-2003 | KEINE | | | |
| EP 1298851 | A | 02-04-2003 | AT | 363789 | T | 15-06-2007 |
| US 2004078097 | A1 | 22-04-2004 | EP<br>FR<br>WO<br>JP | 1364288<br>2821453<br>02069149<br>2004523045 | A1<br>A1<br>A1<br>T | 26-11-2003<br>30-08-2002<br>06-09-2002<br>29-07-2004 |

EPO FORM P0461

Für nähere Einzelheiten zu diesem Anhang : siehe Amtsblatt des Europäischen Patentamts, Nr.12/82